# EUROPEAN PATENT SPECIFICATION

(11) **EP 0 466 056 B1**
(45) Date of publication and mention of the grant of the patent: **08.11.1995**
(21) Application number: 91111249.8
(22) Date of filing: 05.07.1991
(51) Int. Cl.: G01N 27/36, G01N 27/333

(54) **Ion-selective electrode and method for its manufacture**
Ionenselektive Elektrode und Verfahren zur Herstellung derselben
Electrode sélective aux ions et procédé pour sa fabrication

(30) Priority: 07.07.1990 JP 180247/90
(43) Date of publication of application: 15.01.1992
(73) Proprietor: HORIBA, LTD., Minami-ku Kyoto (JP)
(72) Inventor: Kojima, Junji, Sun City Katsurazaka Royal, Nishikyo-ku, Kyoto (JP)
(74) Representative: TER MEER STEINMEISTER & PARTNER GbR

(56) References cited:
- EP-A- 0 269 031
- US-A- 4 282 079
- PATENT ABSTRACTS OF JAPAN Database JAPS/JPO vol. 14, no. 136 P1021 14 March1990 & JP-A-02 002905
- WPIL Database Derwent Publications Ltd., LONDON GB accession no. 87-075463, week 8711; & PATENT ABSTRACTS OF JAPAN Database JAPS/JPO vol. 11, no. 202 (C432) 30 June 1987 & JP-A-62 027435
- PATENT ABSTRACTS OF JAPAN Database JAPS/JPO vol. 12, no. 479 C552 14 December1988 & JP-A-63 193957

## Description

The present invention relates to an ion-selective electrode to be incorporated in an apparatus for measuring an ionic concentration, such as pH, and a method for its manufacture.

In an apparatus for measuring an ionic concentration such as pH, a so-called sheet-type electrode with a flat measuring portion has recently been used in practice. For ion-selective electrodes of this type silicone family adhesives are used for adhering an ion-responsive glass to a PET (polyethylene terephthalate) film.

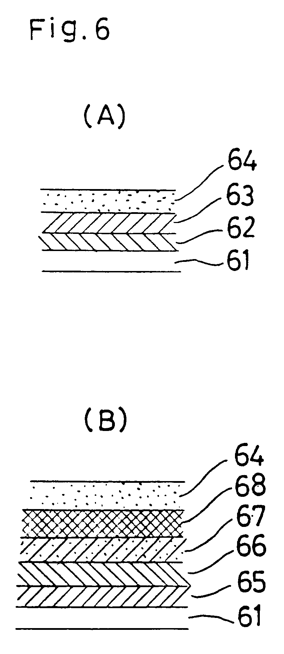

Fig. 6(A) and (B) describe the above mentioned prior art sheet-type electrode. Referring to Fig. 6(A), a primer 62 for use in plastic materials is applied to the upper surface of the PET film 61 and then an ion-responsive glass 64 is adhered to said primer 62 by means of a silicone family adhesive 63. In addition, referring to Fig. 6(B), a polyester family anchor coating agent 65 and a polyester family hot melt adhesive 66 are applied to a PET film 61 in the order described and then said PET film 61 coated with said polyester family anchor coating agent 65 and said polyester family hot melt adhesive 66 is treated with a silicone family primer 67 for use in plastic materials followed by adhering an ion-responsive glass 64 to the treated PET film 61 by the use of single-liquid dealcoholization-type silicone room temperature vulcanizing adhesive 68. Under certain circumstances said ion-responsive glass 64 is in addition treated with a silicone family primer for use in inorganic materials.

However, said ion-selective electrodes according to the above described prior art, show a problem as far as durability is concerned. That is to say, in case where they are used in an environment of high temperature and humidity and water of high temperature, for example the ion-responsive glass 64 is liable to be separated and the electric insulation is deteriorated, so that a sufficient reliability can not be obtained.

It is an object of the present invention to provide a highly reliable ion-selective electrode superior in durability, which is not deteriorated in electric insulation even when it is used under severe conditions, and a method of inexpensively producing said electrode.

This object is provided by the ion-selective electrode according to claim 1 and the method for its manufacture according to claim 2.

The first part of claims 1 and 2 is based on EP-A-0 269 031 Subject matter of the present invention is an ion-selective electrode, comprising a PET substrate (1), an internal electrode (2) formed on a surface thereof, a PET film (4) laminated on said substrate (1) excepting said internal electrode (2), a gelatinized internal liquid (6) covering said internal electrode (2), and an ion-responsive glass (8) covering said gelatinized internal liquid (6) **characterized in that** said ion-responsive glass (8) has been pickled and elutes alkaline metals in a reduced quantity, that an undercoat layer (7) covers the surface of said PET film (4) said undercoat layer comprising a layer of a polyester family anchor coating agent, a layer of a polyester family hot melt and a layer of a silicone family primer, and that said ion-responsive glass being adhered to the surface of said undercoat layer (7) by means of a deoximization-type silicone room temperature vulcanizing adhesive.

A further subject matter of this invention is a method for the manufacture of the ion-selective electrode according to claim 1, comprising the steps of laminating a PET film on a PET substrate which comprises an internal electrode formed on a surface thereof and excepting said internal electrode, providing a gelatinized internal liquid covering said internal electrode **characterized by** subjecting the surface of said PET film to an undercoating treatment by applying a polyester family anchor coating agent, hot melting a polyester family hot melt and then applying a silicone family primer to thus obtain an undercoat layer and then adhering an ion-responsive glass, which has been pickled and elutes alkaline metals in a reduced quantity to the surface of said undercoat layer by means of a deoximization-type silicone room temperature vulcanizing adhesive so as to cover said gelatinized internal liquid.

According to the present invention the adhesion of the ion-responsive glass to the PET film can be improved, and in case of an ion-selective electrode for use in the measurement of pH, the quantity of for example lithium (Li) eluted from the ion-responsive glass is reduced, so that its durability can be improved. The method for the manufacture of said ion-selective electrode is simple and thus the ion-selective electrode can be inexpensively obtained.
**Fig. 1** is a sectional perspective view showing a pH-measuring electrode as one example of an ion-selective electrode according to the present invention;
**Fig. 2** is a longitudinal sectional view of the pH-measuring electrode shown in Fig. 1;
Characteristics of said pH-measuring electrode are shown in Figs. 3 to 5, in which
**Fig. 3** is a diagram showing the pH-responsive characteristics;
**Fig. 4** us a diagram showing the change of sensitivity in water of high temperature;
**Fig. 5** is a diagram showing the change of sensitivity under the condition that temperature and humidity are high;
**Fig. 6(A)** and **(B)** are longitudinal sectional views showing the conventional ion-selective electrode.

The preferred embodiments of the present invention will be described below with reference to the drawings.

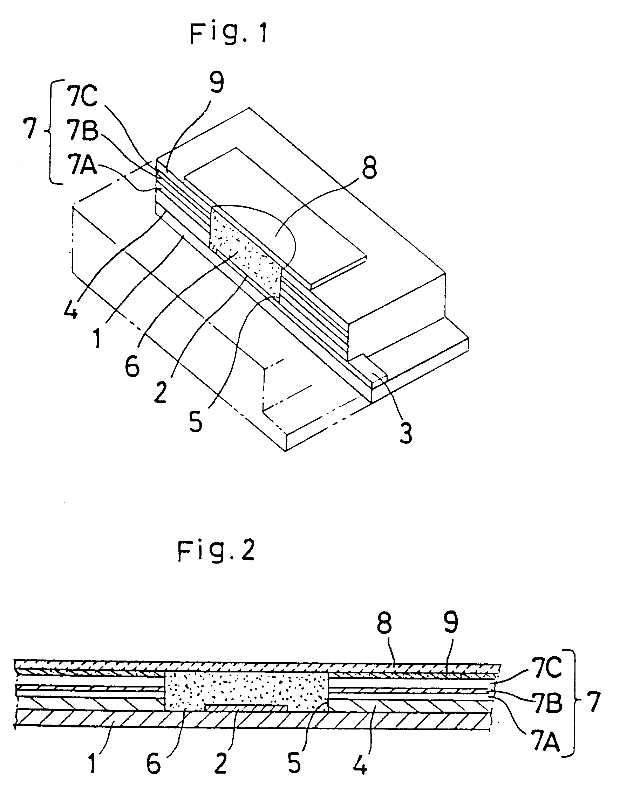

Fig. 1 and Fig. 2 show a pH-measuring electrode as one example of an ion-selective electrode according to the present invention, respectively. Referring to Figs. 1, 2 reference numeral 1 designates a PET printing substrate. A surface of said PET printing substrate 1 is subjected to an appointed pretreatment and then a plurality of electrically conductive portions (not shown) are applied by silk screen printing using an Ag paste. One of said electrically conductive portions is coated with AgCl to form an internal electrode 2 of for example circular shape as seen on a plan view. Reference numeral 3 designates a lead portion connected to said internal electrode 2. Reference numeral 4 designates a PET film (for example Lumilar made by Toray K.K. having a thickness of 188 µm subjected to a corona treatment on both sides thereof). Said PET film 4 is provided with a through hole 5 formed therein. The PET film 4 is laminated on the PET printing substrate 1 so that the internal electrode 2 is housed in said through hole 5.

Reference numeral 6 designates a gelatinized internal liquid charged in the through hole 5 so as to be in contact with the internal electrode 2. Said gelatinized internal liquid 6 is composed of a basic internal liquid comprising for example a AgCl-supersaturated 3.3 N-KCl solution and a phosphate buffer solution to which a gelatinizing agent (for example agar-agar, gelatin, glue, arginic acid, various kinds of acrylic water-absorptive polymer and the like) and a gel vaporization-preventing agent (for example glycerine, ethylene glycol and the like) have been added and is formed in a dis-like shape. Said gelatinized internal liquid 6 is made pasty by for example heating and then charging it by a screen printing method in the through hole 5 so that its upper surface projects over the upper surface of the PET film 4 under free conditions.
Reference numeral 7 designates an undercoat treated layer formed on a surface of the PET film 4 which excepts or leaves free the internal electrode 2 and is formed in for example in the following manner: A polyester family anchor coating agent 7A (for example Adcoat made by Toyo Moton K.K.) is applied in a thickness of 6 to 8 µm and then a polyester family hot melt 7B (for example PES 111 EEF made by Toa Gosei K.K.) is hot molten in a thickness of 50 µm followed by applying a silicone family primer for use in plastic materials (for example the primer C made by Toray Dow Corning Silicone K.K.).

Reference numeral 8 designates a pH-responsive glass (for example No. 42 made by Horiba, Ltd.) as an ion-responsive glass provided on the surface of said undercoat treated layer. Said pH-responsive glass 8 elutes a small quantity of alkaline metallic ions and has previously been pickled. The ion-responsive glass 8 is adhered by means of a deoximization-type silicone RTV adhesive 9 (KE-44 made by Shinetsu Kagaku K.K.) so as to cover the gelatinized internal liquid 6.

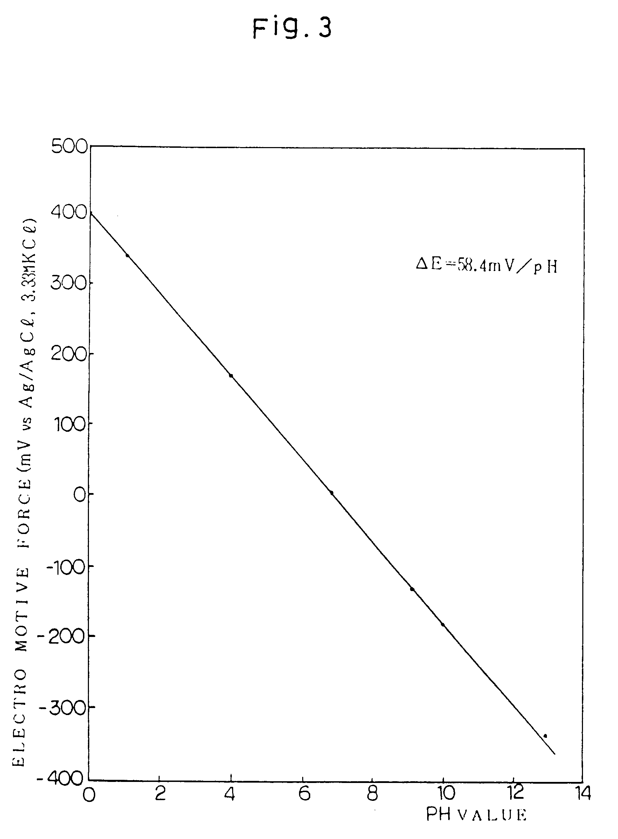

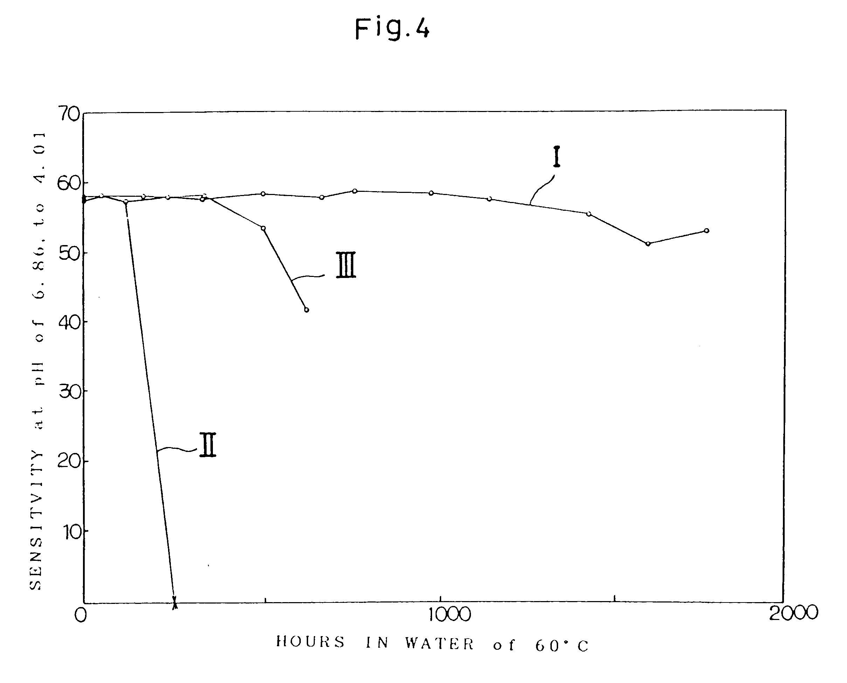

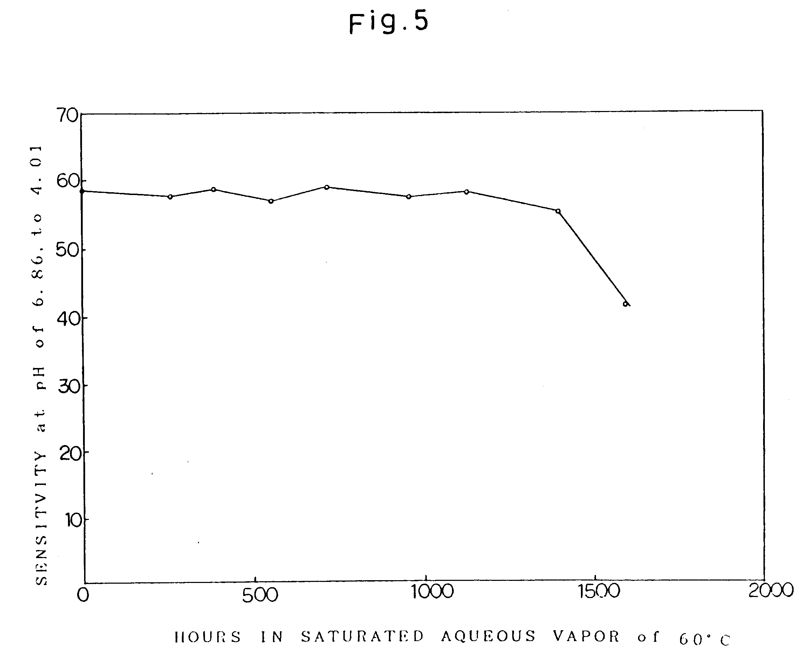

The characteristics of said pH-measuring electrode will be described below with reference to Figs. 3 to 5. The pH-responsive characteristics are linear all over the pH-range as shown in Fig. 3. In order to examine the durability in water of high temperature (ion-exchanged water of 60°C), the change of sensitivity at a pH of 6.86 to 4.01 was investigated with the result that the curve showing the change of sensitivity as shown in Fig. 4 was obtained. Referring to Fig. 4, the curve I relates to the pH-measuring electrode according to the present invention while the curve II and the curve III relate to a pH-measuring electrode having the constructions shown in Fig. 6(A) and Fig. 6(B), respectively. Accordingly, according to the present invention, said durability in water of high temperature is remarkably improved in comparison with the conventional electrodes. In addition, in order to examine said durability under high temperature and humidity conditions, the change of sensitivity at pH of 6.86 to 4.01 was investigated with the result that the curve showing a change of sensitivity as shown in Fig. 5 was obtained. As is understood from Figs. 4, 5, said durability is increased by about 4 times that of conventional electrodes [having the constructions shown in Fig. 6(B)].

As can be understood from the above description, the durability is greatly influenced by the type of adhesive 9 used for the ion-responsive glass 8 and simultaneously the combination of the undercoat treated layer 7 and the ion-responsive glass 8 is important.

The present invention is not limited by the above described preferred embodiment but can be applied also to a Na⁺-measuring electrode and a K⁺-measuring electrode by changing the composition of the ion-responsive glass 8.
As the deoximization-type RTV adhesive 9 also CY 50-069 and CY 50-071 made by Toray Silicone K.K. and TSE 382 made by Toshiba Silicone K.K. may be used in addition to the above described adhesive.

The ion-selective electrode of the present invention is superior in durability and reliability, in that the electric insulation is not deteriorated even when said electrode, which can be inexpensively obtained, is used under severe conditions.

## Claims

1. An ion-selective electrode, comprising a PET substrate (1), an internal electrode (2) formed on a surface thereof, a PET film (4) laminated on said substrate (1) excepting said internal electrode (2), a gelatinized internal liquid (6) covering said internal electrode (2), and an ion-responsive glass (8) covering said gelatinized internal liquid (6) **characterized in that** said ion-responsive glass (8) has been pickled and elutes alkaline metals in a reduced quantity, that an undercoat layer (7) covers the surface of said PET film (4) said undercoat layer comprising a layer of a polyester family anchor coating agent, a layer of a polyester family hot melt and a layer of a silicone family primer, and that said ion-responsive glass being adhered to the surface of said undercoat layer (7) by means of a deoximization-type silicone room temperature vulcanizing adhesive.

2. A method for the manufacture of the ion-selective electrode according to claim 1, comprising the steps of laminating a PET film on a PET substrate which comprises an internal electrode formed on a surface thereof and excepting said internal electrode, providing a gelatinized internal liquid covering said internal electrode **characterized by** subjecting the surface of said PET film to an undercoating treatment by applying a polyester family anchor coating agent, hot melting a polyester family hot melt and then applying a silicone family primer to thus obtain an undercoat layer and then adhering an ion-responsive glass, which has been pickled and elutes alkaline metals in a reduced quantity to the surface of said undercoat layer by means of a deoximization-type silicone room temperature vulcanizing adhesive so as to cover said gelatinized internal liquid.

## Patentansprüche

1. Ionenselektive Elektrode, umfassend ein PET-Substrat (1), eine auf einer Oberfläche davon gebildete Innenelektrode (2), eine auf das Substrat (1) mit Ausnahme der Innenelektrode (2) laminierte PET-Folie (4), eine die Innenelektrode (2) bedeckende gelatinierte Innenflüssigkeit (6) und ein die gelatinierte Innenflüssigkeit (6) bedeckendes ionenansprechendes Glas (8), **dadurch gekennzeichnet,** daß das ionenansprechende Glas (8) geätzt worden ist und in verringerter Menge Alkalimetalle eluiert, daß eine Untergrundschicht (7) die Oberfläche der PET-Folie (4) bedeckt, wobei die Untergrundschicht eine Schicht aus einem Ankerbeschichtungsmittel der Polyesterfamilie, eine Schicht aus einer Schmelzmasse der Polyesterfamilie und eine Schicht aus einem Primer der Silikonfamilie umfaßt, und daß das ionenansprechende Glas mittels eines bei Raumtemperatur vulkanisierenden Silikonklebers vom Deoximisationstyp an der Oberfläche der Untergrundschicht (7) haftet.

2. Verfahren zur Herstellung einer ionenselektiven Elektrode nach Anspruch 1, umfassend die Schritte des Laminierens einer PET-Folie auf ein PET-Substrat, welches eine auf einer Oberfläche davon gebildete Innenelektrode umfaßt, wobei die Innenelektrode ausgenommen wird, des Vorsehens einer gelatinierten Innenflüssigkeit, welche die Innenelektrode bedeckt, **dadurch gekennzeichnet,** daß die Oberfläche der PET-Folie einer Untergrundbeschichtungsbehandlung unterzogen wird durch Aufbringen eines Ankerbeschichtungsmittels der Polyesterfamilie, einer Schmelzmasse der Polyesterfamilie und danach Aufbringen eines Primers der Silikonfamilie, um so eine Untergrundschicht zu erhalten, und daß dann ein ionenansprechendes Glas, welches geätzt worden ist und Alkalimetalle in reduzierter Menge eluiert, mittels eines bei Raumtemperatur vulkanisierenden Silikonklebers vom Deoximisationstyp haftend auf die Oberfläche der Untergrundschicht aufgebracht wird, um so die gelatinierte Innenflüssigkeit zu bedecken.

## Revendications

1. Electrode sélective aux ions, comprenant un susbtrat PET de polyterephtalate d'éthylène (1), une électrode interne (2) formée sur une surface de celui-ci, un film PET (4) laminé sur ledit substrat (1) excepté sur ladite électrode interne (2), un liquide interne gélatineux (6) couvrant ladite électrode interne (2), un verre sensible aux ions (8) couvrant ledit liquide interne gélatineux (6), caractérisée en ce que ledit verre sensible aux ions (8) a été décapé et élue des métaux alcalins dans une quantité réduite, et en ce qu'une couche sousjacente (7) couvre la surface dudit film PET (4), ladite couche sousjacente comprenant une couche d'un agent couvrant d'accrochage de la famille des polyesters, une couche thermofusible de la famille des polyesters et une couche de fond de la famille des silicones et en ce que le verre sensible aux ions adhére à la surface de ladite couche sousjacente (7) au moyen d'un adhésif vulcanisable à température ambiante à base de silicone de type de désoximisation.

2. Procédé de fabrication d'une électrode sélective aux ions selon la revendication 1, comprenant les étapes consistant à laminer un film PET sur un substrat PET qui comprend une électrode interne formée sur une surface de celui-ci, et à l'exception de ladite électrode interne, fournir un liquide interne gélatineux couvrant ladite électrode interne, caractérisé en ce que l'on soumet la surface dudit film PET à un traitement de revêtèment par une sous-couche en appliquant un agent couvrant d'accrochage de la famille des polyesters, coucher par fusion un matériau thermofusible de la famille des polyesters, puis appliquer une première couche de la famille des silicones de manière à obtenir ainsi une couche sousjacente puis faire adhérer un verre sensible aux ions, qui a été décapé et qui élue des métaux alcalins dans une quantité réduite, à la surface de ladite couche sousjacente au moyen d'un adhésif vulcanisable à température ambiante à base de silicone de type de désoximisation, de manière à couvrir ledit liquide interne gélatineux.
